Europäisches Patentamt

European Patent Office

Office européen des brevets

(11) Numéro de publication: **0 350 083 B1**

## (12) FASCICULE DE BREVET EUROPEEN

(45) Date de publication de fascicule du brevet: **08.06.94**  (51) Int. Cl.⁵: **C08G 61/12**, H01B 1/12

(21) Numéro de dépôt: **89201392.1**

(22) Date de dépôt: **01.06.89**

Le dossier contient des informations techniques présentées postérieurement au dépôt de la demande et ne figurant pas dans le présent fascicule.

(54) **Procédé pour la préparation de polythiophènes et dispositifs électroconducteurs les contenant.**

(30) Priorité: **13.06.88 FR 8807976**

(43) Date de publication de la demande:
**10.01.90 Bulletin 90/02**

(45) Mention de la délivrance du brevet:
**08.06.94 Bulletin 94/23**

(84) Etats contractants désignés:
**AT BE CH DE ES FR GB GR IT LI LU NL SE**

(56) Documents cités:

CHEMICAL ABSTRACTS, vol. 107, no. 22, 30 novembre 1987, page 19, résumé no. 199191u, Columbus, Ohio, US; & JP-A-62 109 821

CHEMICAL PATENTS INDEX, BASIC ABS-TRACTS JOURNAL, Section A: PLASDOC, se-maine 8742, 16 décembre 1987, no. 87-296490, Derwent Publications Ltd, Lon-dres, GB; & JP-A-62 209 130

Jap. J. Appl. Phys. vol. 23, no. 12, L899-L900 (1984)

Chem. Abstracts vol. 107, no. 22 (1987) no. 199 187 X

J. Pol. Sci, vol. 23, no. 6, 1687 (1985)

(73) Titulaire: **SOLVAY (Société Anonyme)**
**Rue du Prince Albert, 33**
**B-1050 Bruxelles(BE)**

(72) Inventeur: **Franquinet, Claude**
**Rue du Bon Pasteur, 51**
**B-1140 Bruxelles(BE)**
Inventeur: **Hannecart, Etienne**
**Arboretumlaan, 38**
**B-1980 Tervueren(BE)**

(74) Mandataire: **Nichels, William et al**
**Solvay**
**Département de la Propriété Industrielle**
**Rue de Ransbeek, 310**
**B-1120 Bruxelles (BE)**

# EP 0 350 083 B1

**Description**

La présente invention concerne un procédé pour la préparation de polymères conducteurs d'électricité à base de polythiophènes (également appelés polythiophènes dopés) par polymérisation chimique du thiophène.

On a proposé dans le brevet DE 1178529 un procédé de préparation de polymères aromatiques par polymérisation chimique en présence de catalyseurs Friedel-Crafts, tels que le chlorure ferrique, à une température comprise entre 100 et 800°C. Les polymères obtenus par ce procédé ont des conductivités comprises entre $10^{-10}$ et $10^{-0,5}$ Siemens par cm.

On a également proposé (Jap. J. Appl. Phys., 1984, vol. 23, n° 12, pp. L899-L900) une méthode de polymérisation dans laquelle un substrat tel qu'une plaque de verre est enduit d'une solution d'un acide de Lewis tel que le chlorure ferrique dans du chloroforme ou de la dioxane en l'absence d'eau, avant d'être exposé à des vapeurs de monomères tels que le pyrrole, la furane ou le thiophène. On obtient ainsi par polymérisation in situ des films de polymère conducteur. On comprend facilement que cette méthode est difficile à transposer à une échelle industrielle, et ne convient que pour la production de films.

La polymérisation du thiophène est habituellement réalisée par voie électrochimique afin d'obtenir des produits raisonnablement reproductibles.

Ces procédés de polymérisation électrochimique conduisent toutefois à des polymères peu conducteurs, instables thermiquement et difficiles à mettre en oeuvre. Par ailleurs, dans la plupart des cas, les taux de conversion monomère-polymère sont bas.

On a maintenant trouvé un procédé pour la préparation de polythiophènes par polymérisation purement chimique du thiophène permettant d'obtenir avec un taux de conversion élevé des polymères conducteurs homogènes, ayant des propriétés de conductivité électrique élevée et de stabilité thermique satisfaisante. Les polythiophènes ainsi obtenus sont mis en oeuvre aisément. En outre, après mise en oeuvre de mélanges de polythiophène et de résines telles que le chlorure de polyvinyle ou le polyéthylène, les composites obtenus présentent une bonne dispersion et une résistance mécanique satisfaisante.

A cet effet, la présente invention concerne un procédé pour la préparation de polymères conducteurs d'électricité à base de polythiophènes par polymérisation chimique du thiophène dans un milieu réactionnel comprenant un sel ferrique, un halogénure d'alkyle et de l'eau.

Dans le milieu réactionnel, on met généralement en oeuvre un halogénure d'alkyle comprenant de 1 à 10 atomes de carbone. Habituellement, on met en oeuvre un halogénure d'alkyle linéaire ou ramifié contenant de 1 à 8 atomes de carbone, l'halogénure étant un chlorure ou un fluorure. De préférence, on met en oeuvre un chlorure d'alkyle linéaire contenant de 1 à 4 atomes de carbone. De manière particulièrement préférée, on met en oeuvre le chloroforme ou le chlorure de méthylène.

Dans le milieu réactionnel, on met en oeuvre du chlorure ferrique anhydre comme agent dopant et provoquant la polymérisation.

La quantité d'halogénure d'alkyle mis en oeuvre dans le procédé selon l'invention est généralement comprise entre 0,04 et 1 litre par g de thiophène, habituellement entre 0,05 et 0,8 litre par g de thiophène et de préférence entre 0,08 et 0,5 litre par g de thiophène.

Le rapport molaire entre le chlorure ferrique anhydre et le thiophène mis en oeuvre dans le procédé selon l'invention est généralement compris entre 2,5 et 20. Habituellement, ce rapport est compris ente 5 et 15 et de préférence entre 8 et 12.

La quantité d'eau dans le procédé selon l'invention est généralement comprise entre 0,01 et 5 % en poids d'halogénure d'alkyle, habituellement entre 0,3 et 4 % et de préférence entre 0,5 et 3 % en poids d'halogénure d'alkyle.

La réaction est habituellement conduite sous atmosphère d'air ou d'azote et, de préférence, sous atmosphère d'azote.

La température à laquelle est réalisé le procédé de l'invention est généralement comprise entre 0 et 25°C, habituellement entre 2 et 20°C et de préférence entre 5 et 15°C lorsqu'on opère à pression atmosphérique.

La pression à laquelle est réalisé le procédé est généralement comprise entre 0,1 et 10 bar et de préférence elle est égale à la pression atmosphérique.

Le procédé selon l'invention peut avantageusement être réalisé en suivant les étapes suivantes :
- lors d'une première étape, on introduit dans le réacteur sous atmosphère d'azote une fraction de la quantité nécessaire d'halogénure d'alkyle et le chlorure ferrique anhydre;
- lors d'une deuxième étape, on ajoute sous agitation l'eau et le thiophène dissous dans la quantité nécessaire d'halogénure d'alkyle, avec obtention d'un polymère;
- lors d'une troisième étape, le polymère obtenu est lavé, puis séché.

2

Lors de la deuxième étape, il est particulièrement avantageux d'introduire l'eau et le thiophène dissous dans l'halogénure d'alkyle de façon continue, régulière et en parallèle.

Lors de la troisième étape, le polymère obtenu est de préférence lavé avec de l'acétonitrile.

Le procédé selon l'invention peut être réalisé dans tout appareillage ou tout réacteur permettant de réunir les conditions opératoires décrites ci-avant.

Les polythiophènes obtenus selon le procédé de l'invention peuvent être aisément dispersés dans des résines polymériques diverses et mis en oeuvre facilement. En effet, les polythiophènes et leurs mélanges avec des polymères thermoplastiques tels que le chlorure de polyvinyle ou le polyéthylène notamment, peuvent être estampés à chaud pour obtenir des plaques ou objets composites. Ces plaques ou objets composites présentent une bonne résistance mécanique et possèdent, contrairement aux objets composites réalisés avec des polythiophènes obtenus par voie électrochimique, une conductivité électrique résiduaire élevée et stable dans le temps. Ces plaques ou objets composites sont homogènes car les polythiophènes y sont bien dispersés.

Les plaques ou objets composites peuvent être chargées notamment par des fibres de verre, du noir de carbone, du carbonate de calcium ou des particules métalliques.

L'invention concerne donc également des compositions comprenant les polythiophènes et un ou plusieurs polymères thermoplastiques, ainsi que les dispositifs électroconducteurs comprenant ces compositions.

Enfin, les polythiophènes et les compositions comprenant des polythiophènes obtenus selon le procédé de l'invention peuvent être utilisés pour leurs propriétés de conductivité électrique, d'absorption électromagnétique et de conductivité thermique et, plus particulièrement, pour la réalisation de dispositifs électroconducteurs.

L'invention est illustrée par les exemples suivants.

Exemple 1

Comme réacteur, on utilise un ballon de 3 l à 5 cols; chaque col étant muni respectivement d'un robinet à 3 voies, d'un thermomètre, d'un réservoir à robinet de 250 ml surmonté d'un robinet à 3 voies, d'un septum permettant de planter une aiguille reliée à une seringue doseuse de 50 ml.

Ce ballon équipé d'un agitateur est placé dans un bain thermostatique et est purgé par un cycle de 3 vides et 2 rinçages à l'azote pur et sec.

Dans ce ballon maintenu à 10°C sous azote, on introduit ensuite 850 ml de chloroforme préalablement dégazé à l'azote, puis sous agitation on ajoute 185 g de chlorure ferrique anhydre.

Ensuite, on remplit la seringue doseuse avec 10 ml d'eau déminéralisée et dégazée, puis le réservoir à robinet avec 150 ml de chloroforme et 9,25 g de thiophène distillé et dégazé.

On introduit en parallèle et en 10 minutes dans le ballon l'eau à l'aide de la seringue, le chloroforme et le thiophène à l'aide du réservoir à robinet.

Le ballon est ensuite encore maintenu à 10°C pendant une heure, après quoi on introduit 400 ml d'acétonitrile très lentement durant 1 heure dans ce ballon maintenu à 10°C.

Puis, on agite durant 10 minutes.

Le produit est ensuite filtré à l'air à 20°C.

Le produit obtenu est lavé 3 fois avec 300 ml d'acétonitrile à 20°C, puis séché sous vide dynamique à 20°C.

On obtient finalement 15 g de polythiophène dopé qui présente une conductivité de 45 S.cm$^{-1}$ et avec taux de conversion

$$\left[ \frac{\text{polymère (polythiophène calculé comme non dopé)}}{\text{monomère (thiophène)}} \right] \text{ de 95 \%.}$$

Exemple 2

3 g de chlorure de polyvinyle (PVC vendu sous la dénomination SOLVIC 271 GB nombre K71) sont mélangés avec 7 g de polythiophène tel qu'obtenu à l'exemple 1.

Le mélange est introduit dans une presse où il subit un estampage à 130°C durant 1 minute sous une pression d'une tonne par cm$^2$.

Les résultats sont rassemblés dans le tableau 1.

Exemple 3R (de comparaison)

10 g de chlorure de polyvinyle (PVC vendu sous la dénomination SOLVIC 271 GB nombre K71) sont introduits dans une presse où ils subissent un estampage à 130°C durant 1 minute sous une pression d'une tonne par cm$^2$.

Les résultats sont rassemblés dans le tableau 1.

Exemple 4

10 g de polythiophène tel qu'obtenu à l'exemple 1 sont introduits dans une presse où ils subissent un estampage à 130°C durant 1 minute sous une pression d'une tonne par cm$^2$.

Les résultats sont rassemblés dans le tableau 1.

Exemples 5 et 6

2 g (pour l'exemple 5) et 4 g (pour l'exemple 6) de polyéthylène (PE vendu sous la dénomination ELTEX B 5920 de masse volumique 0,950 g/cm$^3$ à 20°C et de HLMI 10 g/10 min.) sont mélangés respectivement avec 8 g et 6 g de polythiophène tel qu'obtenu à l'exemple 1.

Chaque mélange est introduit dans une presse où il subit un estampage à 130°C durant 1 minute sous une pression d'une tonne par cm$^2$.

Les pastilles obtenues ont une conductivité de 33 S.cm$^{-1}$ pour l'exemple 5 et de 20 S.cm$^{-1}$ pour l'exemple 6.

4

Tableau 1

| | Polythio-phène % | Chlorure de polyvinyle % | Conducti-vité S.cm$^{-1}$ | Résistance mécanique | | | |
| | | | | Vitesse de la panne 1mm/mn | Vitesse de la panne 5 mm/mn | | |
| | | | | Module apparent d'élasticité en flexion MPa | Contrainte de flexion à la rup-rupture MPa | Déforma-tion maximale à la rupture % | Flèche à la rupture mm |
|---|---|---|---|---|---|---|---|
| Exemple 2 | 70 | 30 | 38 | 4370 | 5170 | 32,8 | 0,7 | 0,7 |
| Exemple 3R | 0 | 100 | 0 | 2320 | 2130 | 8,5 | 0,5 | 0,4 |
| Exemple 4 | 100 | 0 | 40 | 2880 | 2990 | 20,4 | 0,9 | 0,9 |

La résistance mécanique a été mesurée suivant les normes d'essai de flexion : NFT 51-001 de septembre 1972, ISO 178-1975 (F) et ASTM D 790 M-86; ces tests ont été effectués à 23°C sur des éprouvettes de 55 mm de long, 15 mm de large et 2 mm d'épaisseur; la distance entre les points d'appui étant fixée à 35 mm.

## Revendications

1. Procédé pour la préparation de polymères conducteurs d'électricité à base de polythiophènes, caractérisé en ce que le thiophène est polymérisé par voie chimique dans un milieu réactionnel comprenant du chlorure ferrique anhydre, un halogénure d'alkyle et de l'eau, et en ce que la quantité d'eau mise en oeuvre est comprise entre 0,01 et 5 % en poids d'halogénure d'alkyle.

2. Procédé selon la revendication 1, caractérisé en ce que l'halogénure d'alkyle mis en oeuvre est le chloroforme ou le chlorure de méthylène.

3. Procédé selon l'une quelconque des revendications précédentes, caractérisé en ce que le rapport molaire entre le chlorure ferrique et le thiophène est compris entre 2,5 et 20.

4. Procédé selon l'une quelconque des revendications précédentes, caractérisé en ce que la quantité d'halogénure d'alkyle mis en oeuvre est comprise entre 0,04 et 1 litre par g de thiophène.

5. Procédé selon l'une quelconque des revendications précédentes, caractérisé en ce que la température est comprise entre 0 et 25°C.

6. Procédé selon la revendication 5, caractérisé en ce qu'il comprend les étapes suivantes :
   - lors d'une première étape, on introduit dans le réacteur sous atmosphère d'azote une fraction de la quantité nécessaire d'halogénure d'alkyle et le chlorure ferrique anhydre;
   - lors d'une deuxième étape, on ajoute sous agitation l'eau et le thiophène dissous dans la quantité nécessaire d'halogénure d'alkyle, un polymère est obtenu;
   - lors d'une troisième étape, le polymère obtenu est lavé puis séché.

7. Procédé selon la revendication 6, caractérisé en ce que le polymère obtenu lors de la troisième étape est lavé avec l'acétonitrile.

8. Procédé selon les revendications 6 ou 7, caractérisé en ce que le polymère obtenu est mélangé avec un polymère thermoplastique, tel que le chlorure de polyvinyle ou le polyéthylène, et que le mélange ainsi obtenu est estampé à chaud.

9. Dispositifs électroconducteurs comprenant un polymère obtenu selon l'une quelconque des revendications 1 à 8.

10. Dispositifs électroconducteurs selon la revendication 9, caractérisés en ce qu'ils comprennent un ou plusieurs polymères thermoplastiques tel que le chlorure de polyvinyle ou le polyéthylène.

**Claims**

1. Process for the preparation of electrically conductive polymers based on polythiophenes, characterized in that thiophene is polymerized by a chemical route in a reaction medium comprising anhydrous ferric chloride, an alkyl halide and water, and in that the quantity of water used is between 0.01 and 5 % by weight of alkyl halide.

2. Process according to Claim 1, characterized in that the alkyl halide used is chloroform or methylene chloride.

3. Process according to any one of the preceding claims, characterized in that the molar ratio of ferric chloride to thiophene is between 2.5 and 20.

4. Process according to any one of the preceding claims, characterized in that the quantity of alkyl halide used is between 0.04 and 1 litre per g of thiophene.

5. Process according to any of the preceding claims, characterized in that the temperature is between 0 and 25°C.

6. Process according to Claim 5, characterized in that it comprises the following stages:
   - during a first stage, a fraction of the necessary quantity of alkyl halide and the anhydrous ferric chloride are introduced into the reactor under a nitrogen atmosphere;

- during a second stage, the water and the thiophene, which is dissolved in the necessary quantity of alkyl halide, are added with stirring and a polymer is obtained;
- during a third stage, the polymer obtained is washed and then dried.

7. Process according to Claim 6, characterized in that the polymer obtained during the third stage is washed with acetonitrile.

8. Process according to Claims 6 or 7, characterized in that the polymer obtained is blended with a thermoplastic polymer such as polyvinyl chloride or polyethylene, and that the blend thus obtained is pressure-formed hot.

9. Electroconductive devices comprising a polymer obtained according to any one of Claims 1 to 8.

10. Electroconductive devices according to Claim 9, characterized in that they comprise one or more thermoplastic polymers such as polyvinyl chloride or polyethylene.

**Patentansprüche**

1. Verfahren zur Herstellung elektrisch leitfähiger Polymere auf der Basis von Polythiophenen, dadurch gekennzeichnet, daß das Thiophen auf chemischem Weg in einem Reaktionsmilieu, welches wasserfreies Eisenchlorid, ein Alkylhalogenid und Wasser umfaßt, polymerisiert wird, und daß die Menge an verwendetem Wasser zwischen 0,01 und 5 Gew.-% des Alkylhalogenids beträgt.

2. Verfahren gemäß Anspruch 1, dadurch gekennzeichnet, daß das verwendete Alkylhalogenid Chloroform oder Methylenchlorid ist.

3. Verfahren gemäß irgendeinem der vorhergehenden Ansprüche, dadurch gekennzeichnet, daß das Molverhältnis zwischen dem Eisenchlorid und dem Thiophen zwischen 2,5 und 20 beträgt.

4. Verfahren gemäß irgendeinem der vorhergehenden Ansprüche, dadurch gekennzeichnet, daß die Menge an verwendetem Alkylhalogenid zwischen 0,04 und 1 Liter pro g Thiophen beträgt.

5. Verfahren gemäß irgendeinem der vorhergehenden Ansprüche, dadurch gekennzeichnet, daß die Temperatur zwischen 0 und 25 °C liegt.

6. Verfahren gemäß Anspruch 5, dadurch gekennzeichnet, daß es die folgenden Schritte umfaßt:
   - bei einem ersten Schritt überführt man unter Stickstoffatmosphäre einen Teil der notwendigen Menge an Alkylhalogenid und das wasserfreie Eisenchlorid in das Reaktionsgefäß;
   - bei einem zweiten Schritt fügt man unter Rühren das Wasser und das in der notwendigen Menge an Alkylhalogenid gelöste Thiophen zu, und ein Polymer wird erhalten.
   - bei einem dritten Schritt wird das erhaltene Polymer gewaschen, dann getrocknet.

7. Verfahren gemäß Anspruch 6, dadurch gekennzeichnet, daß das erhaltene Polymer beim dritten Schritt mit Acetonitril gewaschen wird.

8. Verfahren gemäß den Ansprüchen 6 oder 7, dadurch gekennzeichnet, daß das erhaltene Polymer mit einem thermoplastischen Polymer, wie z.B. Polyvinylchlorid oder Polyethylen, gemischt wird, und daß das so erhaltene Gemisch in der Wärme geprägt wird.

9. Elektrisch leitfähige Vorrichtungen, welche ein gemäß irgendeinem der Ansprüche 1 bis 8 erhaltenes Polymer umfassen.

10. Elektrisch leitfähige Vorrichtungen gemäß Anspruch 9, dadurch gekennzeichnet, daß sie ein oder mehrere thermoplastische Polymere, wie z.B. Polyvinylchlorid oder Polyethylen, umfassen.